**Europäisches Patentamt**

**European Patent Office**

**Office européen des brevets**

(19)

(11) Veröffentlichungsnummer: **0 121 819**
**B1**

(12) EUROPÄISCHE PATENTSCHRIFT

(45) Veröffentlichungstag der Patentschrift:
27.01.88

(51) Int. Cl.⁴: **H 01 K 1/34**

(21) Anmeldenummer: **84102812.9**

(22) Anmeldetag: **15.03.84**

(54) **Reflektorlampe.**

(30) Priorität: **12.04.83 DE 8310715 U**

(43) Veröffentlichungstag der Anmeldung:
**17.10.84 Patentblatt 84/42**

(45) Bekanntmachung des Hinweises auf die Patenterteilung:
**27.01.88 Patentblatt 88/4**

(84) Benannte Vertragsstaaten:
**BE DE FR GB IT**

(56) Entgegenhaltungen:
**FR - A - 2 389 829**
**GB - A - 2 053 442**
**US - A - 3 987 326**

(73) Patentinhaber: **Patent-Treuhand-Gesellschaft für elektrische Glühlampen mbH, Hellabrunner Strasse 1, D-8000 München 90 (DE)**

(72) Erfinder: **Krieg, Rudolf, Ing. grad., Bozener Strasse 1, D-8000 München 90 (DE)**
Erfinder: **Ziegler, Friedrich, Dipl.-Ing., Leitenweg 85, D-8190 Wolfratshausen (DE)**
Erfinder: **Bierbrauer, Franz-Josef, Dipl.-Ing., Joachim-Königsbauer-Weg 28 a, D-8031 Wörthsee (DE)**

## Beschreibung

Die Erfindung bezieht sich auf eine Reflektorlampe zur Beleuchtung im gewerblichen Bereich, beispielsweise von Schaufenstern, Verkehrsräumen usw., mit einem parabolischen Reflektor, der eine Scheitelöffnung aufweist, und einer Lichtquelle, die aus einer im Scheitel des Reflektors angeordneten, mit dem Reflektor koaxialen Halogenglühlampe besteht, sowie mit elektrischen Anschlusselementen, die an der Rückseite des Reflektors angebracht sind – siehe, zum Beispiel, US-A-3 987 326 oder GB-A-2 053 442.

Üblicherweise sind Lampen dieser Art in Sealed Beam-Ausführung gefertigt. Ein verspiegelter Pressglaskörper bildet den Reflektor. Eine vakuumdicht aufgesetzte transparente Frontscheibe aus Glas und mit Ringstufe zum lagerichtigen Anordnen der Lampe in Leuchten schliesst den gasgefüllten Reflektorraum gegen aussen ab. Eine Glühwendel ist im Reflektorraum angeordnet. Stromzuführungen tragen die Glühwendel sowie eine Abdeckung, die unerwünschtes Streulicht verhindert. Metallische Anschlusskappen sind in das Reflektorglas luftdicht eingeschmolzen, in denen die Enden der durch Reflektoröffnungen geführten Stromzuführungen verlötet sind. Kontaktbleche mit Befestigungsschraube für elektrische Anschlussleitungen sind auf die Anschlusskappen aussen aufgebracht.

Aufgabe der Erfindung ist es, eine Reflektorlampe nach dem Oberbegriff des Hauptanspruchs zu schaffen, die mit den bekannten Lampen in ihrer Anwendung austauschbar ist, diesen gegenüber jedoch höhere axiale Lichtstärke und den Vorteil eines einfachen Aufbaus und geringeren Gesamtgewichts aufweist.

Die gestellte Aufgabe wird durch die im Kennzeichen des Hauptanspruchs aufgeführten Merkmale gelöst. Vorteilhafte Ausgestaltungen sind in den abhängigen Ansprüchen wiedergegeben. Weitere Einzelheiten können der nachfolgenden Beschreibung mit Zeichnungen entnommen werden. Von den Figuren zeigen

Figur 1 eine bekannte Reflektorlampe in Seitenansicht

Figur 2 die neuerungsgemässe Reflektorlampe im Schnitt

Figur 3 den Scheitelbereich des Reflektors der Lampe nach Figur 2 in Seitenansicht

Figur 4 die Lampe nach Figur 2 in Rückansicht

Figur 5 einen Schnitt des Sockelsteines

Figur 6 ein Flachstück mit Kappe in Draufsicht

Figur 7 die Lampe nach Figur 2 mit elektrischen Anschlussmöglichkeiten

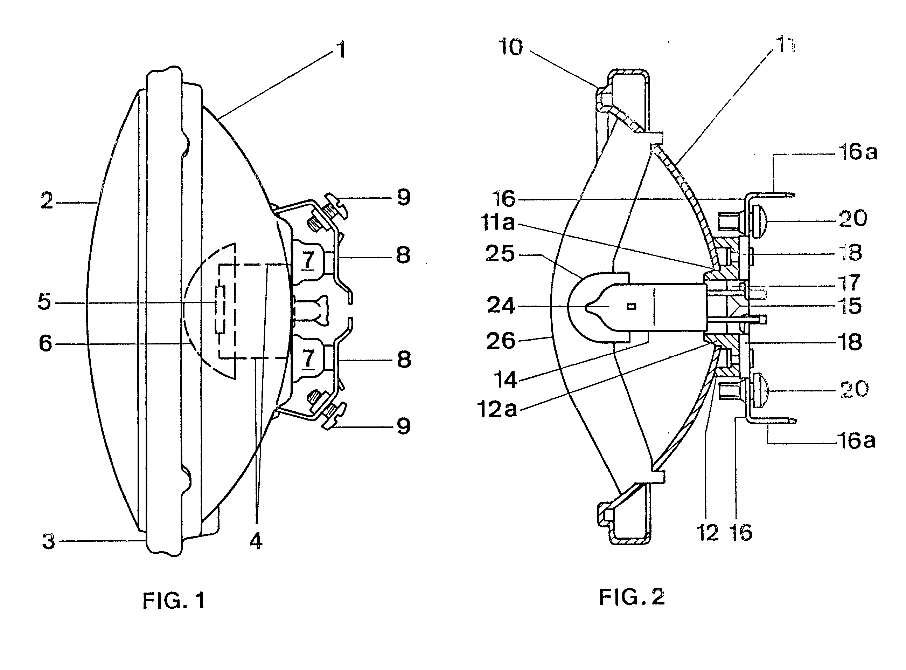

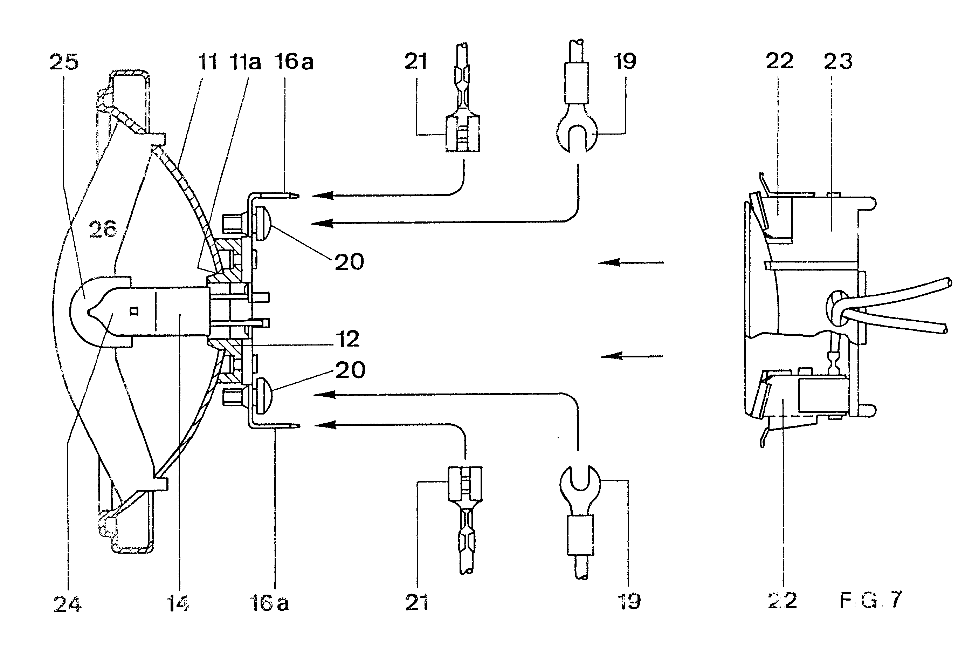

Die bekannte, in Sealed Beam-Technik gefertigte Reflektorlampe (Figur 1) weist als Reflektor den schweren verspiegelten Pressglaskörper 1 auf. Der gasgefüllte Reflektorraum ist durch die vakuumdicht aufgesetzte transparente gewichtige Frontscheibe 2 aus Glas gegen aussen abgeschlossen. Die Ringstufe 3 der Frontscheibe 2 dient zum lagerichtigen Anordnen der Lampe in Leuchten. Stromzuführungen 4 tragen die Glühwendel 5 sowie eine Abdeckung 6, die unerwünschtes Streulicht verhindert. Die Enden der Stromzuführungen sind durch Reflektoröffnungen geführt und in den metallischen Anschlusskappen 7 verlötet, die in den Pressglaskörper 1 luftdicht eingeschmolzen sind. Auf den Anschlusskappen 7 sind die Kontaktbleche 8 befestigt. Befestigungsschrauben 9 dienen zum Anschliessen der Lampe an elektrische Stromzuleitungen. Die Ausbildung der Kontaktbleche 8 erlaubt auch einen direkten elektrischen Kontakt mit einer für diese Lampen vorgesehenen bekannten Lampenfassung 23 (Figur 7). Beispielsweise in den USA sind diese Reflektorlampen und die ihnen zugeordneten Fassungen im Handel.

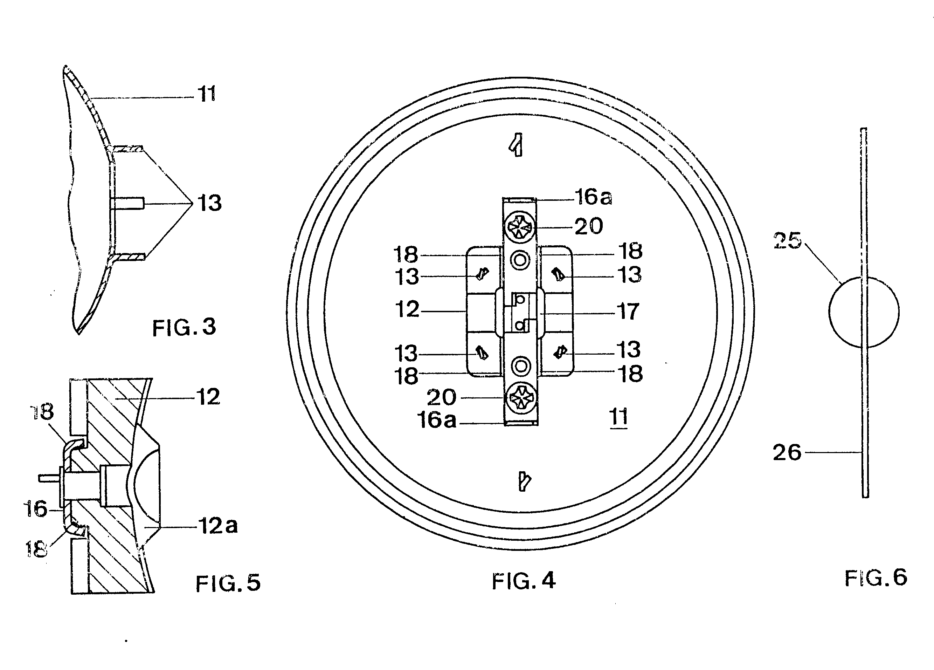

Demgegenüber besitzt die in ihren äusseren Abmessungen der bekannten Lampe angepasste erfindungsgemässe Reflektorlampe einen leichten Metallreflektor 11 aus dünnem, etwa 0,8 mm–1 mm, vorzugsweise 0,8 mm dicken Blech aus Reinaluminium mit glatter, glanzeloxierter parabolischer Innenfläche. Eine Frontscheibe fehlt. Die Aufgabe der Ringstufe 3 der bekannten Lampe übernimmt ein Stülprand 10, der dem Reflektor 11 angeformt ist. Die Bautiefe des Reflektors 11 beläuft sich im Scheitel auf maximal 30 mm. Im Scheitel des Reflektors 11 ist eine kreisrunde Öffnung 11a, die ein rückseitig aufgesetzter Sockelstein 12 (Figuren 2, 4) aus temperaturbeständigem Material, beispielsweise Keramik abdeckt. Der Sockelstein 12, dessen erhabenes Mittelstück 12a die Öffnung 11a durchsetzt, ist im wesentlichen quaderförmig. Er ist mit seiner Auflagefläche dem Verlauf der Reflektorkrümmung angepasst und ist über vier Laschen 13 aufgeschoben, die dem Reflektor 11 in dessen Scheitelbereich angeformt sind (Figur 3). Zum Befestigen des Sockelsteins 12 sind die überstehenden Laschenenden verdreht. Eine Halogenglühlampe 14 (6 V, 35 W), mit deren Hilfe gegenüber den bekannten Reflektorlampen eine höhere axiale Lichtstärke erzielbar ist, ist im Scheitel des Reflektors 11 angeordnet und ersetzt die Glühwendel 5 der bekannten Lampe. Die Halogenglühlampe 14 wird an ihren äusseren Stromzuführungen 15 von Kontaktfahnen 16 gehalten, die in eine zentrale rechteckige Öffnung 17 des Sockelsteins 12 hineinragen. Die Stromzuführungen 15 sind angeschweisst. Die Kontaktfahnen 16 sind mit dem Sockelstein 12 vernietet und haben seitliche Führungslappen 18, mit denen sie ihre Unterlage umgreifen, wodurch sie gegen Verdrehen gesichert sind (Figur 5). Zum Anklemmen von Kabelschuhen 19 elektrischer Stromversorgungsleitungen tragen die Kontaktfahnen Klemmschrauben 20. Die Enden 16a der Kontaktfahnen 16 sind zu Flachsteckern geformt. Sie sind zur Aufnahme elektrischer Anschlusssteckhülsen 21 geeignet bzw. erlauben den Einsatz der erfindungsgemässen Reflektorlampe in die bekannte Fassung 23. Bei in die Fassung 23 eingesetzter Lampe ist die Fassung über den Sockelstein 12 geschoben und die Kontaktfahnen 16 kontaktieren die Kontaktelemente 22 der Fassung 23. Zur Abschirmung von Direktstrahlung ist die Lampenkuppe 24 von einer Kappe 25 umfasst. Die Kappe 25 dient zur Abschirmung von Direktstrahlung. Sie ist mittels eines Flachstückes 26 am Reflektor 11 befestigt, das sich brückenbogenartig von Reflektorseite zu Reflektorseite spannt (Figur 6).

**Patentansprüche**

1. Reflektorlampe zur Beleuchtung im gewerblichen Bereich, beispielsweise von Schaufenstern, Verkaufsräumen usw., mit einem parabolischen Reflektor (11), der eine Scheitelöffnung (11a) aufweist, und einer Lichtquelle, die aus einer im Scheitel des Reflektors angeordneten, mit dem Reflektor koaxialen Halogenglühlampe (14) besteht, sowie mit elektrischen Anschlusselementen, die an der Rückseite des Reflektors angebracht sind, gekennzeichnet durch die Kombination folgender Merkmale:
   - der Reflektor (11) besteht aus Aluminiumblech und weist einen Stülprand (10) auf;
   - ein Sockelstein (12) aus temperaturbeständiger Keramik ist auf die Scheitelöffnung (11a) des Reflektors (11), an dessen Rückseite aufgesetzt;
   - der Sockelstein (12) weist eine zentrale Öffnung (17) auf sowie an seiner dem Reflektor (11) abgewandten Seite als elektrische Anschlusselemente ein Paar von Kontaktfahnen (16), wobei letztere einander gegenüberliegend am Rand des Sockelsteins (12) befestigt sind;
   - die äusseren Stromzuführungen (15) der Halogenglühlampe (14) sind durch die zentrale Öffnung (17) des Sockelsteins (12) hindurchgeführt;
   - die Kontaktfahnen (16) ragen mit ihren ersten Enden über die Öffnung (17) des Sockelsteins (12), wobei an diesen Enden die äusseren Stromzuführungen (15) der Halogenglühlampe (14) zur Halterung und elektrischen Kontaktierung befestigt sind;
   - die Kontaktfahnen (16) weisen für einen herzustellenden Steckkontakt abgewinkelte zweite Enden (16a) auf.

2. Reflektorlampe nach Anspruch 1, dadurch gekennzeichnet, dass die Kuppe (24) der Lampe (14) von einer zur Abschirmung von Direktstrahlung dienenden Kappe (25) umfasst ist, die mittels eines Flachstücks (26), das sich brückenbogenartig von Reflektorseite zu Reflektorseite spannt, am Reflektor (11) befestigt ist.

3. Reflektorlampe nach Anspruch 1, dadurch gekennzeichnet, dass der Sockelstein (12) ein erhabenes Mittelstück (12a) aufweist, das die Öffnung (11a) des Reflektors (11) durchsetzt und dass das Mittelstück (12) seinerseits eine zentrale Öffnung (17) hat.

4. Reflektorlampe nach Anspruch 1, dadurch gekennzeichnet, dass die Kontaktfahnen (16) des weiteren Klemmschrauben (20) zum Befestigen elektrischer Zuleitungen aufweisen.

5. Reflektorlampe nach Anspruch 1, dadurch gekennzeichnet, dass jede Kontaktfahne (16) seitliche Führungslappen (18) aufweist, die zur Verdrehsicherung um einen an der Unterseite des Sockelsteins (12) befindlichen Absatz herumgebogen sind.

6. Reflektorlampe nach Anspruch 1, dadurch gekennzeichnet, dass der Sockelstein (12) auf seiner dem Reflektor (11) zugewandten Seite der Form des Reflektors angepasst ist.

7. Reflektorlampe nach Anspruch 1, dadurch gekennzeichnet, dass an der Scheitelöffnung (11a) des Reflektors (11) Laschen (13) ausgeformt und durch Ausnehmungen im Sockelstein (12) geführt sind, wobei die freien Enden der Laschen (13) zur Befestigung des Sockelsteins (12) am Reflektor (11) verdreht sind.

8. Reflektorlampe nach Anspruch 1, dadurch gekennzeichnet, dass das Aluminiumblech, aus dem der Reflektor (11) geformt ist, eine Blechdicke von 0,8 mm–1 mm aufweist.

9. Reflektorlampe nach Anspruch 1, dadurch gekennzeichnet, dass die Bautiefe des Reflektors höchstens 30 mm beträgt.

**Claims**

1. A reflector lamp for lighting in the commercial sector, for example, for display windows, showrooms, etc., with a parabolic reflector (11) having a vertex opening (11a), and a light source which consists of a halogen bulb (14) disposed in the vertex of the reflector coaxially with the reflector, and with electrical connecting elements which are located on the back of the reflector, characterised by the combination of the following features:
   - the reflector (11) is made of aluminium sheet and has a turned-back rim (10);
   - a base block (12) made of thermally stable ceramic material is placed over the vertex opening (11a) of the reflector (11) at the back of the reflector;
   - the base block (12) has a central opening (17) and on its side remote from the reflector (11), has electrical connecting elements in the form of a pair of contact lugs (16) which are fixed opposite one another on the edge of the base block (12);
   - the external current supply leads (15) of the halogen bulb (14) are passed through the central opening (17) of the base block (12);
   - the first ends of the contact lugs (16) project over the opening (17) of the base block (12), and the external current supply leads (15) of the halogen bulb (14) are fastened at these ends for support and electrical contact;
   - the contact lugs (16) have angled second ends (16a) to provide a socket connection.

2. A reflector lamp as claimed in Claim 1, characterised in that the head (24) of the bulb (14) is covered by a cap (25) which serves as a shield against direct radiation and is fixed to the reflector (11) by means of a plate (26) which spans the reflector from side to side like the arch of a bridge.

3. A reflector lamp as claimed in Claim 1, characterised in that the base block (12) has a raised middle part (12a) which the passes through the opening (11a) of the reflector (11), and in that the middle part (12) itself has a central opening (17).

4. A reflector lamp as claimed in Claim 1, characterised in that the contact lugs (16) also have screw terminals (20) for the attachment of electrical leads.

5. A reflector lamp as claimed in Claim 1, characterised in that each contact lug (16) has lateral locating tabs (18) which are bent around a shoulder on the underside of the base block (12) to prevent twisting.

6. A reflector lamp as claimed in Claim 1, characterised in that at its side facing the reflector (11), the base block (12) is adapted to the shape of the reflector.

7. A reflector lamp as claimed in Claim 1, characterised in that tongues (13) are formed at the vertex opening (11a) of the reflector (11) and are passed through holes in the base block (12), and the free ends of the tongues (13) are twisted to secure the base block (12) to the reflector (11).

8. A reflector lamp as claimed in Claim 1, characterised in that the aluminium sheet of which the reflector (11) is formed has a thickness of from 0.8 mm to 1 mm.

9. A reflector lamp as claimed in Claim 1, characterised in that the depth of the reflector is at most 30 mm.

**Revendications**

1. Lampe à réflecteur destinée à réaliser, dans le domaine commercial, l'éclairage par exemple de vitrines, de salles de vente, etc, comportant un réflecteur parabolique (11) qui possède une ouverture sommitale (11a), et une source de lumière, qui est constituée par une lampe à halogène (14) disposée au sommet du réflecteur et coaxiale à ce dernier, ainsi que des organes électriques de raccordement qui sont disposés sur la face arrière du réflecteur, caractérisée par la combinaison des moyens suivants:

– le réflecteur (11) est constitué par une tôle d'aluminium et possède un rebord à feuillure (6),

– un bloc porte-culot (12) réalisé en une céramique résistante à la température et monté sur l'ouverture sommitale (11a) du réflecteur (11), contre la face arrière de ce réflecteur;

– le bloc porte-culot (12) possède une ouverture centrale (17) ainsi que, sur sa face tournée vers le réflecteur (11), un couple de languettes de contact (16) utilisées en tant qu'organes électriques de raccordement, ces languettes de contact étant fixées de manière à être mutuellement en vis-à-vis, sur le bord du bloc porte-culot (12),

– les organes extérieurs (15) d'alimentation en courant de la lampe à halogène (14) traversent l'ouverture centrale (17) du bloc porte-culot (12);

– les languettes de contact (16) pénètrent, par leurs premières extrémités, dans l'ouverture (17) du bloc porte-culot (12), auquel cas les organes extérieurs (15) d'alimentation en courant de la lampe à halogène (14) sont fixés sur ces extrémités de manière à assurer le soutien et l'établissement du contact électrique;

– les languettes de contact (7) possèdent des secondes extrémités (16a) coudées pour un contact par enfichage devant être établi.

2. Lampe à réflecteur suivant la revendication 1, caractérisé par le fait que l'ampoule (24) de la lampe (14) est entourée par un capot (25) qui sert à établir une protection vis-à-vis du rayonnement direct et est fixé sur le réflecteur (11) au moyen d'un élément plat (26) qui s'étend d'un côté à l'autre du réflecteur à la manière de l'arche d'un pont.

3. Lampe à réflecteur suivant la revendication 1, caractérisée par le fait que le bloc porte-culot (12) comporte un élément central saillant (12a) qui s'étend à travers l'ouverture (11a) du réflecteur (11) et que l'organe central (12) possède pour sa part une ouverture centrale (17).

4. Lampe à réflecteur suivant la revendication 1, caractérisée par le fait que les languettes de contact (16) comportent par ailleurs des vis de serrage (20) servant à fixer des organes électriques d'alimentation.

5. Lampe à réflecteur suivant la revendication 1, caractérisée par le fait que chaque languette de contact (16) comporte des pattes latérales de guidage (18) qui, afin de réaliser un blocage en rotation, sont repliées autour d'une partie saillante ménagée sur la face inférieure du bloc porte-culot (12).

6. Lampe à réflecteur suivant la revendication 1, caractérisée par le fait que le bloc porte-culot (12) est adapté, sur sa face tournée vers le réflecteur (11), à la forme de ce dernier.

7. Lampe à réflecteur suivant la revendication 1, caractérisée par le fait que des attaches (13) sont formées par façonnage à proximité de l'ouverture sommitale (11a) du réflecteur (11) et sont guidées dans des découpes ménagées dans le bloc porte-culot (12), auquel cas on tord les extrémités libres des attaches (13) pour réaliser la fixation du bloc porte-culot (12) sur le réflecteur (11).

8. Lampe à réflecteur suivant la revendication 1, caractérisée par le fait que la tôle d'aluminium, dont est formé le réflecteur (11), possède une épaisseur de tôle comprise entre 0,8 mm et 1 mm.

9. Lampe à réflecteur suivant la revendication 1, caractérisée par le fait que la profondeur de construction du réflecteur est égale au maximum à 30 mm.

FIG. 1

FIG. 2

0 121 819

FIG. 3

FIG. 5

FIG. 4

FIG. 6

0 121 819

F.G.7